# EUROPEAN PATENT SPECIFICATION

(11) **EP 0 861 335 B1**
(45) Date of publication and mention of the grant of the patent: **25.07.2001**
(21) Application number: 96939393.3
(22) Date of filing: 24.10.1996
(51) Int. Cl.: C21C 1/00, C10J 3/57, C21B 13/12, C21C 5/52

(54) **PROCESS FOR THE DESTRUCTION OF RUBBER-BASED MATERIALS AND AUTOMOBILE FRAGMENTATION RESIDUES**
VERFAHREN ZUR VERNICHTUNGVON MATERIALIEN AUF GUMMIBASIS UND KRAFTFAHRZEUGZERKLEINERUNGSRÜCKSTÄNDEN
PROCEDE DE DESTRUCTION DE MATERIAUX ET DE RESIDUS DE DEMOLITION D'AUTOMOBILES A BASE DE CAOUTCHOUC

(30) Priority: 14.11.1995 SE 9504049
(43) Date of publication of application: 02.09.1998
(73) Proprietor: INTERPROJECT SERVICE AB, 640 33 Bettna (SE)
(72) Inventor: AXELSSON, Carl-Lennart, S-128 38 Skarpnäck (SE); FREDRIKSSON, Gunnar, S-640 33 Bettna (SE)
(74) Representative: Örtenblad, Bertil Tore
(86) International application number: SE9601367
(87) International publication number: WO9718336

(56) References cited:
- EP-A- 0 657 549
- WO-A-94/04633

## Description

The present invention relates to a process for the destruction of rubber-based materials and in particular vehicle tyres and automobile fragmentation residues.

The greater share of all vehicle tyres which are scrapped and all industrial waste from the rubber industry are deposited as landfill. This is despite the ambitious research undertaken for many years to find practical and economic possibilities for conversion and recycling. The situation is similar in all industrialised countries.

Aside from vehicle tyres, automobile fragmentation produces large quantities of waste containing rubber-based material and various plastic materials.

It would appear that the only large scale possibility to take care of the very large quantities of vehicle tyres and automobile fragmentation residues is to utilise them as an energy source. However, combustion of vehicle tyre in traditional furnaces causes problems as the rubber contains large amounts of carbon black, a high sulphur content and also organic materials which require high temperatures to break them down completely. Additionally, residues in the form of steel reinforcement are a problem.

As described in American patent US 4,175,949 it has also been proposed to utilise tyres as fuel in a blast furnace. However this involves burning up the tyres with the consequent problem of the exhaust gases containing large quantities of carbon black.

International patent application WO 93/24662 shows the placement of rubber scrap in an electric arc furnace. If such a process were to be applied the tyres would burn up while floating on the surface of a metal smelt. This would also lead to exhaust gases with a lot of carbon black and other contaminants, such as sulphur.

WO-A-94/04633 discloses a process for converting a carbon source like rubber tyres to synthesis gas. In this process the carbon source is introduced into molten metal in a first zone and it is then contacted with oxygen in a second zone, the molten metal being circulated between the first and the second zone.

Total destruction or degradation of all the component materials in vehicle tyres requires a higher temperature than that attained during traditional combustion.

The present invention envisions a process for converting rubber scrap, such as vehicle tyres, to an energy-rich gas, while also obtaining very low contaminant levels in the outgoing gas.

The present invention thus relates to a process according to claim 1 for the destruction of rubber-based material and plastic materials, the process employing a metal smelt in a smelt reactor, wherein products of the rubber-based material and/or a plastic material are partially fragmented to form product pieces and the fragmented material is then contacted with an iron smelt, wherein oxygen is introduced to the smelt, which process is distinguished in that the pieces of said material are supplied to the metal bath, that the pieces are substantially or completely retained in the bath under the bath surface until the pieecs have been gasified in contact with the smelt and supplied oxygen, that a foaming slag is established over the smelt, and that the metal bath is brought into agitation to such a degree that the pieces are drawn down beneath the bath surface by the motion of the smelt.

The invention will be more closely described below, in part in conjunction with an embodiment of apparatus for carrying out the process depicted in the accompanying drawing, in which
Figure 1 schematically depicts apparatus to which the invention can be applied; and
Figure 2 schematically depicts a smelt reactor.

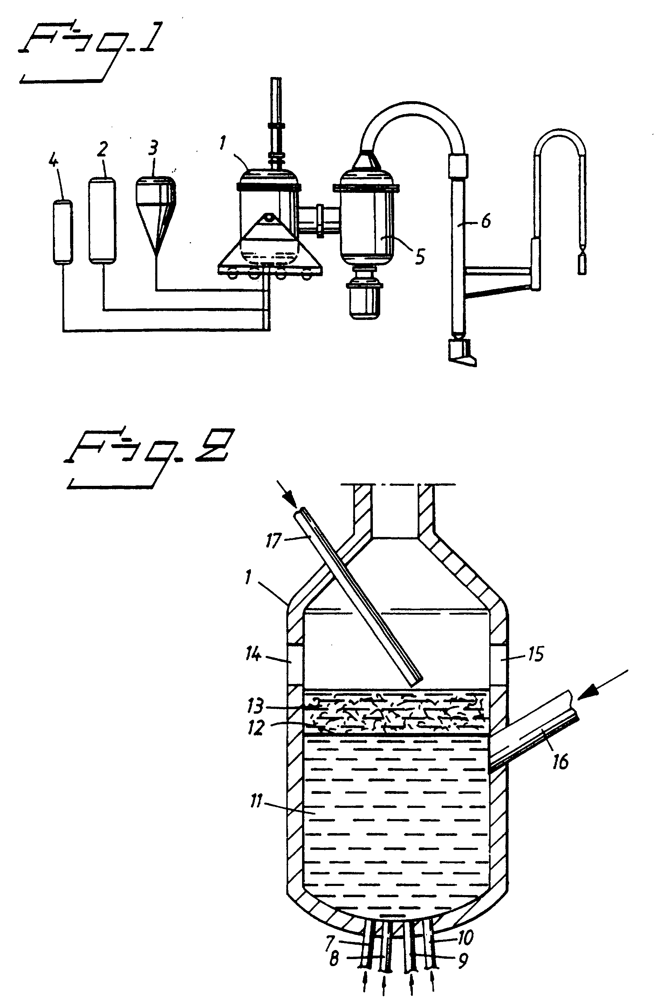

Figure 1 schematically illustrates the present process for the destruction of rubber-based materials and plastic materials employing a metal smelt in a smelt reactor. Products of the rubber-based material and/or a plastic material are partially fragmented such that product pieces are formed, after which the fragmented material is contacted with a metal smelt.

In Figure 1, numeral 1 denotes a reactor containing a metal smelt. Numeral 2 denotes a supply system for oxygen, numeral 3 a supply system for coal and additives and numeral 4 denotes a supply system for a carrier gas. Numeral 5 denotes a gas/slag separator and numeral 6 denotes a gas cooler. The apparatus depicted in Figure 1 operates essentially in accordance with the "CIG process", where CIG stands for "Coal Iron Gasification" process. The CIG process is described inter alia in Swedish patents 8301159-3 and 8503571-5 and thus the process is not further described in this context.

Figure 2 schematically depicts a reactor 1 in vertical cross section. The reactor has a plurality of tuyeres 7 -10 which discharge under the bath surface 12 of the metal smelt 11. Oxygen, slag former and nitrogen can be introduced through these tuyeres. A floating slag 13 floats on top of bath 12. Closable openings 14, 15 are provided for the removal of slag and the tapping of the smelt. An opening is located in the top of reactor through which the gas formed flows.

In the CIG process the metal smelt is an iron smelt. Oxygen is introduced to the metal smelt, together with coal. The coal is oxidised in the smelt by means of the oxygen so that large amounts of carbon monoxide are formed. Additionally, hydrocarbons are cracked in the metal smelt. The result is the formation of an energy-rich gas containing approximately 65 % carbon monoxide and 35 % hydrogen.

In accordance with the invention said pieces of fragmented products of said material are supplied to the metal bath. The pieces are substantially or completely retained beneath the surface of the bath until the pieces have been gasified in contact with the smelt and supplied oxygen. Additionally, a foaming slag is established on top of the smelt while at the same time the metal bath is brought into agitation to such a degree that the pieces are drawn under the surface of the bath by the motion of the smelt.

By retained substantially under the surface of the bath is meant that the pieces are located in the bath or in that part of the bath which consists of a smelt and slag phase.

An iron bath of this type has a temperature of around 1400 - 1500 °C. By subjecting the pieces to such a high temperature, the organic material will be completely converted to carbon monoxide and hydrogen. The problem of large quantities of carbon black in the exhaust gases is thus solved. A comparatively clean gas comprising carbon monoxide and hydrogen is instead obtained. The sulphur content of the pieces, as supplied, dissolves within the bath and the slag.

The metal which for example vehicle tyres contain in the form of steel cord will, of course, melt and become a part of the bath. Other metals the pieces may contain such as As, Cd, Zn, Pb etc are gasified and can be separated with a suitable conventional dust collector located downstream of said gas cooler.

Oxides formed from the pieces together with the added slag former build a fluid slag on top of the metal bath. The sulphur will also be present in the slag. Such contaminants will thus be removed from the process via the slag which is intermittently or continuously withdrawn from the bath. A certain amount of sulphur will, however, be present in the dust. This residual amount of sulphur is removed via an effective, conventional dust separator and can be recycled to the iron bath.

As the smelt is supplied with iron from the steel cord, the smelt must also be tapped. This is preferably done intermittently. In order to start up the process the reactor must, of course, contain a metal smelt.

By means of the present process rubber and plastic scrap is thus converted to a clean energy-rich gas.

An element analysis for vehicle tyres and the gas produced is shown below in Table 1.

**Table 1**

| Tyre composition (wt %) | | Material supplied per tonne smelt per hour | | Outgoing material | | |
|---|---|---|---|---|---|---|
| C | 68.3 | Tyres | 250 kg | slag | | 35 kg |
| H | 5.8 | Additives | 29 kg | ash | | 19 kg |
| O | 6.5 | Oxygen | 142 m³n | gas | | 486 m³n |
| S | 1.4 | | | | CO | 64.3% |
| Fe | 12.0 | | | | H₂ | 32.8 % |
| Zn | 1.8 | | | | | |
| Pb | 0.1 | | | | | |
| Cl | 0.7 | | | | | |

It is apparent that large amounts of clean gas are produced and that the amounts of slag and dust are relatively small.

An essential feature of the present process is that the pieces are substantially or completely retained beneath the surface of the bath due to the intense agitation whereby they are subjected to the surrounding high temperature. The organic material is thus gasified as described above.

In order to achieve this, a foaming slag is established on top of the smelt and at the same time the metal bath is brought into agitation to such a degree that the pieces are drawn beneath the surface of the bath due to the motion of the smelt.

A foaming slag is a slag which expands, thus becoming porous and has therefore has a lower density than a more compact slag. The slag consists essentially of CaO, SiO₂ and FeO. The slag formers CaO and SiO₂ are intermittently or continously added to the process. The relative proportions of these two slag formers regulate in a known fashion how porous the slag becomes.

In order to form a foaming slag, oxygen is blown against the bath surface with a top lance 17.

The lower density of a foaming slag facilitates the pieces being retained lower down in the slag and smelt phase than would be the case with a more compact slag having a higher density, because the pieces tend more easily to float on top of a slag of higher density.

In a preferred embodiment agitation is provided by injecting nitrogen through tuyeres located beneath the bath surface, in a conventional manner.

According to a further preferred embodiment, which may be combined with the embodiment mentioned immediately above, the agitation is provided by injecting oxygen into the bath beneath the bath surface.

Each of these embodiments create an intense agitation which is sufficient to retain the pieces in the bath while they are gasified.

In accordance with a preferred embodiment, said pieces are fed into to the bath at a level beneath the slag. A feed opening 16 which discharges in the reactor 1 beneath the bath surface 12 is provided for this purpose, as shown in Figure 2.

According to an alternative embodiment, said pieces are supplied into the bath from above by means of a lance or corresponding device. To this end lance 17 or a corresponding lance can be utilised.

To some extent the alternatives as regards supply are influenced bythe size of the said pieces. Vehicle tyres can be relatively cheaply fragmented to pieces measuring around 20 - 150 millimetres. Grinding tyres down to a rubber powder having a grain size up to around 2 millimetres is relatively expensive, but facilitates supply into the bath.

Rubber fragments, for instance granulated to 20-150 millimetres, including the steel cord can be fed for example from a suitable dosing means of conventional design directly down towards the agitated slag/metal bath and be drawn down into the bath. The agitation can be provided by oxygen or nitrogen by means of tuyeres located beneath the bath surface, for example at the bottom of the reactor. Any additional oxygen necessary for gasification of the rubber can be supplied via the top lance 17 which provides additional agitation. The organic compounds are broken down by the high temperature in the slag and bath at the same time as the supplied oxygen or oxidised iron drops in the slag oxidise the organic compounds in the slag and form the gas.

The gas produced is cleaned of dust in a conventional manner and can be used for energy purposes or as a synthesis gas. The sulphur which is present in the rubber is partially absorbed by the lime-rich slag and partially by the iron-containing dust. Separated iron dust is recycled to the bath.

Rubber fragments with a size of 20 - 150 millimetres can also be fed in via nozzles located beneath the slag/smelt bath surface through screw feeds at each nozzle. The oxygen can in this case be supplied via an annular passage around each nozzle. Oxygen can also be supplied via a top lance or through a bottom tuyere.

In the event that the tyres are ground down to a powder, this can be pneumatically injected via tuyeres located beneath the bath surface. Oxygen is conveniently supplied in an annular passage around the tuyere.

The reactor with the iron smelt can be an open system and operate at atmospheric pressure.

However, according to a preferred embodiment, the reactor is constructed as a closed system. In this context, said material, oxygen and slag former are added intermittently or continuously. Slag is withdrawn intermittently or continuously.

In the event that the reactor is constructed as a closed system it is preferably operated at an above atmospheric pressure, which pressure can be up to 20 bar. In this manner the carbon gasification capacity is increased at the same time as the dimensions of the offgas treatment system are decreased.

It will be apparent that the present invention provides for destruction of rubber and plastic scrap in a very effective and profitable manner.

A number of embodiments have been described above. It is, however, clear that the composition of the metal bath can be varied and that the bath can contain metals other than iron which enter the bath, for example via scrap from automobile fragmentation.

The present invention should thus not be considered as limited to the above described embodiments, but can be varied within the scope of the accompanying patent claims.

## Claims

1. A process for the destruction of rubber-based material and plastic materials, the process employing an iron smelt in a smelt reactor (1), wherein products of the rubber-based material and/or a plastic material are partially fragmented to form product pieces and the fragmented material is then contacted with the iron smelt, oxygen and the pieces of said material are supplied to the smelt (11), the pieces are substantially or completely retained in the bath (11) under the bath surface (12) and a slag (13) is established on top of the smelt, characterised in that the pieces are retained in the bath until the pieces have been gasified in contact with the smelt and supplied oxygen, in that the slag is a foaming slag, and in that the metal bath is brought into agitation to such a degree that the pieces are drawn down beneath the bath surface (12) by the motion of the smelt.

2. A process according to claim 1, characterised in that the agitation is provided by injecting nitrogen through tuyeres (7) located beneath the bath surface (12).

3. A process according to claim 1 or 2, characterised in that the agitation is provided by injecting oxygen into the bath (11) beneath the bath surface (12) and above the bath surface.

4. A process according to any preceding claim, characterised in that said pieces are fed into the bath at a level below the slag (13).

5. A process according to any one of claims 1 to 3, characterised in that said pieces are supplied to the bath from above by means of a lance or corresponding device.

6. A process according to claim 1, 2, 3, 4 or 5, characterised in that the reactor (1) is constructed as a closed system, that said materials, oxygen and slag former are added intermittently or continuously, and that slag (13) is withdrawn intermittently or continuously.

7. A process according to claim 6, characterised in that the reactor (1) is operated at an above atmospheric pressure, which pressure can be up to 20 bar.

## Patentansprüche

1. Verfahren zur Vernichtung von Materialien auf Gummibasis und von Kunststoffmaterialien, wobei das Verfahren eine Eisenschmelze in einem Schmelzreaktor (1) einsetzt, bei dem Produkte aus Material auf Gummibasis und/oder Kunststoffmaterial teilweise zerlegt werden, um Produktteile zu bilden und das zerlegte Material dann mit der Eisenschmelze in Kontakt gebracht wird, bei dem Sauerstoff und die Teile des Materials in die Schmelze (11) gebracht werden, wobei die Teile im wesentlichen oder vollständig in dem Bad (11) unter der Badoberfläche (12) gehalten werden und eine Schlacke (13) auf der Oberfläche der Schmelze gebildet wird, **dadurch gekennzeichnet,** daß die Teile in dem Bad zurückgehalten werden bis die Teile in Kontakt mit der Schmelze in gasförmigen Zustand übergegangen sind und Sauerstoff zugeführt wird, daß die Schmelze eine schäumende Schmelze ist und daß das Metallbad so stark in Bewegung gebracht wird, daß die Teile durch die Bewegung der Schmelze unter die Badoberfläche gebracht werden.

2. Verfahren nach Anspruch 1, **dadurch gekennzeichnet,** daß die Bewegung durch Einbringen von Stickstoff durch Blasdüsen (7) erreicht wird, die unterhalb der Badoberfläche (12) angeordnet sind.

3. Verfahren nach Anspruch 1 oder 2, **dadurch gekennzeichnet,** daß die Bewegung durch Einbringen von Sauerstoff in das Bad (11) unterhalb der Badoberfläche (12) und oberhalb der Badoberfläche erreicht wird.

4. Verfahren nach einem der vorhergehenden Ansprüche, **dadurch gekennzeichnet,** daß die Teile in das Bad auf einem Niveau unterhalb der Schlacke (13) eingebracht werden.

5. Verfahren nach einem der Ansprüche 1 bis 3, **dadurch gekennzeichnet,** daß die Teile mittels einer Sauerstofflanze oder einer ähnlichen Vorrichtung von oben zu dem Bad zugeführt werden.

6. Verfahren nach einem der Ansprüche 1, 2, 3, 4 oder 5, **dadurch gekennzeichnet,** daß der Reaktor (1) als ein geschlossenes System konstruiert ist, daß die Materialien, Sauerstoff und Schlackenbildner intermittierend oder kontinuierlich zugeführt werden, und daß Schlacke (13) intermittierend oder kontinuierlich abgezogen wird.

7. Verfahren nach Anspruch 6, **dadurch gekennzeichnet,** daß der Reaktor (1) bei einem über dem atmosphärischen Druck liegenden Druck betrieben wird, wobei der Druck bis zu 20 bar betragen kann.

## Revendications

1. Procédé de destruction de matériaux à base de caoutchouc et de matériaux plastiques, le procédé mettant un oeuvre une fusion de fer dans un réacteur de fusion (1) dans lequel des produits du matériau à base de caoutchouc et/ou du matériau plastique sont partiellement fragmentés pour former des morceaux de produit et le matériau fragmenté est ensuite mis en contact avec la fusion de fer, de l'oxygène, et les morceaux dudit matériau sont acheminés à la fusion (11), les morceaux sont substantiellement ou complètement retenus dans le bain (11) sous la surface du bain (12) et une scorie (13) est établie sur la fusion, caractérisé en ce que les morceaux sont retenus dans le bain jusqu'à ce que les morceaux soient gazéifiés en contact avec la fusion et l'oxygène fourni, en ce que la scorie est une scorie moussante et en ce que le bain de métal est amené en agitation à un tel degré que les morceaux sont attirés vers le bas sous la surface du bain (12) par le mouvement de la fusion.

2. Procédé selon la revendication 1, caractérisé en ce que l'agitation est fournie par l'injection d'azote à travers des tuyères (7) logées au-dessous de la surface du bain (12).

3. Procédé selon les revendications 1 ou 2, caractérisé en ce que l'agitation est fournie par l'injection d'oxygène dans le bain (11) au-dessous de la surface du bain (12) et au-dessus de la surface du bain.

4. Procédé selon l'une quelconque des revendications précédentes, caractérisé en ce que les morceaux sont amenés au bain à un niveau inférieur à la scorie (13).

5. Procédé selon l'une quelconque des revendications 1 à 3, caractérisé en ce que lesdits morceaux sont amenés au bain d'en haut au moyen d'une lance ou d'un dispositif correspondant.

6. Procédé selon l'une quelconque des revendications 1, 2, 3, 4 ou 5, caractérisé en ce que le réacteur (1) est construit comme système fermé, que lesdits matériaux, l'oxygène et l'agent formant la scorie sont ajoutés par intermittence ou de manière continue et que la scorie (13) est retirée par intermittence ou de manière continue.

7. Procédé selon la revendication 6, caractérisé en ce que le réacteur (1) est opéré à une pression supérieure à la pression atmosphérique, laquelle pression peut aller jusqu'à 20 bar.
